# FASCICULE DE BREVET EUROPEEN

(11) **EP 2 730 678 B1**
(45) Date de publication et mention de la délivrance du brevet: **12.08.2020**
(21) Numéro de dépôt: 13191586.0
(22) Date de dépôt: 05.11.2013
(51) Int. Cl.: C23C 18/12, A47J 36/02, C09D 183/04

(54) **ARTICLE EN FONTE D'ACIER COMPRENANT UN REVÊTEMENT VITREUX ET PROCÉDÉ DE FABRICATION D'UN TEL ARTICLE**
ARTIKEL AUS GUSSSTAHL UMFASSEND EINE GLASARTIGE BESCHICHTUNG UND VERFAHREN ZUR HERSTELLUNG EINES SOLCHEN ARTIKELS
ARTICLE MADE OF CAST STEEL COMPRISING A VITREOUS COATING AND METHOD OF MANUFACTURING SUCH AN ARTICLE

(30) Priorité: 13.11.2012 FR 1260766
(43) Date de publication de la demande: 14.05.2014
(73) Titulaire: SEB S.A., 69130 Ecully (FR)
(72) Inventeur: Muller, Pierre Jean, 74540 Saint Félix (FR); Dubanchet, Aurélien, 73100 Grésy sur Aix (FR); Perillon, Jean-Luc, 26130 Saint Paul Trois Chateaux (FR)
(74) Mandataire: Regimbeau

(56) Documents cités:
- FR-A1- 2 915 205
- US-A1- 2011 174 826
- US-A1- 2012 018 433
- US-A1- 2012 269 976
- Hugh J. Roper: "Selecting the right abrasive", Journal of Protective Coatings and Linings, 1 juin 2006 (2006-06-01), pages 4-8, XP055073698, Extrait de l'Internet: URL:http://www.paintsquare.com/store/asset s/JPCL_abr_ebook.pdf [extrait le 2013-07-31]

## Description

La présente invention concerne de manière générale un article en fonte d'acier comprenant au moins une face qui présente une rugosité spécifique et est munie d'un revêtement vitreux comprenant une huile de silicone. La présente invention concerne également un procédé de fabrication d'un invention un revêtement synthétisé par voie sol-gel à partir d'une tel article.

Par fonte d'acier, on entend, au sens de la présente invention, une fonte de type alliage ferreux.

Par revêtement vitreux, on entend au sens de la présente solution à base de précurseurs en phase liquide, qui se transforme en un solide par un ensemble de réactions chimiques (hydrolyse et condensation) à basse température. Le revêtement ainsi obtenu est un revêtement hybride organique-inorganique.

Par revêtement organique-inorganique, on entend au sens de la présente invention, un revêtement dont le réseau est essentiellement inorganique, mais qui comporte des groupements organiques, notamment en raison des précurseurs utilisés et de la température de cuisson du revêtement et de la présence d'huile de silicone.

Dans le domaine des revêtements sol-gel, on connaît notamment ceux obtenus à partir d'alcoxydes métalliques à base de silicium (silanes) ou ceux à base d'aluminium (aluminates). Ces revêtements ont actuellement un développement important dans le domaine des articles culinaires, et plus particulièrement ceux dont le support est en acier inoxydable ou en aluminium. Ils sont notamment utilisés à titre de revêtements antiadhésifs recouvrant la surface interne de cuisson.

En ce qui concerne les articles en fonte d'acier, les revêtements protecteurs et/ou décoratifs connus à ce jour sont à base d'émail ou d'huile végétale.

En ce qui concerne plus particulièrement les articles culinaires en fonte d'acier émaillés, ceux-ci sont émaillés tant sur leur face intérieure, que sur leur face extérieure, avec des émaux mats ou brillants. Ils présentent toutefois de nombreux inconvénients. En effet, pour l'émaillage d'un support en fonte, il est impératif d'utiliser une fonte grise, avec une composition chimique telle que le pourcentage massique de carbone (par rapport au poids total du support) soit compris entre 3,2 et 3,7%, celui du silicium compris entre 2,2 et 3%, celui du manganèse entre 0,4 et 0,7%, celui du phosphore entre 0,4 et 1%, et enfin celui du soufre entre 0,05 et 0,1% en poids. Si cela n'est pas pris en compte, des défauts d'aspect dans l'émail risquent d'apparaître après la cuisson, par exemple des points noirs, ou un phénomène de piqûres.

D'autre part avant l'émaillage, un traitement mécanique poussé (grenaillage fort) est préconisé pour augmenter la surface superficielle du support et enlever les impuretés laissées lors du moulage de l'article en fonte, de manière à améliorer l'adhérence de l'émail sur la fonte.

De plus, l'émaillage de la fonte d'acier nécessite la plupart du temps (hormis pour un émail mat) une double cuisson : une première cuisson à 800°C-840°C pour dégazer le substrat avant application de la deuxième couche d'émail ; et une deuxième cuisson pour la deuxième couche d'émail à 770-800°C. Le procédé d'émaillage de la fonte d'acier est long et très consommateur d'énergie, et donc finalement coûteux.

Enfin, en raison des températures élevées de cuisson et de des variations d'épaisseur dans la couche d'émail ou dans le support le risque de rebut (notamment pour des défauts de type lignage (défauts du métal reproduits par le revêtement) est élevé : il avoisine souvent 20% ce qui est supérieur d'un ordre de grandeur à ce que l'on observe généralement avec un émail pour aluminium.

Par ailleurs, les articles en fonte d'acier enduits d'une huile végétale de couleur noire sont souvent attractifs à neuf, mais sont connus pour être incompatibles avec une cuisine saine et pratique. En outre, de tels articles sont difficiles à nettoyer et présentent, à l'usage, une faible dureté et une faible résistance à l'oxydation. Enfin d'un point de vue esthétique, l'utilisation d'une huile végétale pour recouvrir un support en fonte d'acier restreint la gamme de couleurs au seul noir.

Or, la demanderesse a maintenant mis au point un procédé permettant de déposer un revêtement vitreux sur un support en fonte, qui présente des propriétés de résistance au lave-vaisselle et d'adhérence au support, qui permettent d'éviter tous les inconvénients précités. En outre, un tel procédé permet de déposer un revêtement vitreux dont la couleur peut être choisie dans une gamme de couleur aussi étendue que dans le cas d'un revêtement en émail (sans être réduite au noir comme dans le cas d'une huile végétale).

Il est connu de l'homme de l'art d'utiliser des revêtements sol-gel sur articles en fonte d'acier. Toutefois, ces revêtements ne sont pas directement en contact avec le support en fonte de l'article dans la mesure où ils sont déposés sur une couche émaillée intermédiaire. Par exemple, la demande de brevet américain US 2011/0111239 enseigne un revêtement antiadhésif pour surfaces en acier ou fonte d'acier comprenant une première couche d'émail vitrifié obtenue à partir d'une composition de fritte d'émail chauffée à une température de l'ordre de 700°C, dont une partie est rendue rugueuse et sur laquelle est déposée une couche de revêtement sol-gel obtenue à partir d'alcoxydes métalliques. Cependant, US 2011/0111239 enseigne clairement que le revêtement bicouche émail/sol-gel permet d'éviter les inconvénients d'un revêtement entièrement sol-gel pour fonte, qui serait faiblement antiadhésif, mais aussi rugueux et pouvant facilement se corroder au lave-vaisselle. D'autres revêtements sont décrits dans les documents FR2915205 et US2011/078426.

La demanderesse a maintenant prouvé qu'il était possible de résoudre ce problème de résistance au lave-vaisselle d'un revêtement vitreux obtenu par voie sol-gel déposé directement sur le support en fonte en incorporant dans la matrice à base de polyalcoxylate métallique du revêtement vitreux une huile de silicone, réactive choisie parmi les huiles chlorées, aminées, vinylées, époxydées, méthacrylées, hydroxylées, et les huiles avec terminaisons anhydrides ou hydrures. Par ailleurs, le problème de l'adhérence sur le support en fonte du revêtement vitreux est résolu par un état de surface adapté au dépôt d'un revêtement vitreux obtenu par voie sol-gel.

Plus particulièrement, la présente invention a pour objet un article comprenant un support en fonte d'acier présentant deux faces opposées, caractérisé en ce qu'il comporte un revêtement vitreux se présentant sous la forme d'au moins une couche continue d'un matériau sol-gel comprenant une matrice formée à partir d'au moins un polyalcoxylate métallique et au moins une huile de silicone réactive choisie parmi les huiles chlorées, aminées, vinylées, époxydées, méthacrylées, hydroxylées, et les huiles avec terminaisons anhydrides ou hydrures, ladite couche de matériau sol-gel étant disposée directement sur l'une au moins des faces dudit support, et
en ce que ladite face munie d'un revêtement vitreux présente une rugosité de surface Ra comprise entre 3 et 15 µm avec un nombre de pics par centimètre RPc compris entre 50 et 200, et de préférence compris entre 90 et 120 selon la norme EN 10049 (« Mesure de la rugosité moyenne ra et du nombre de pics par centimètre RPc sur les produits plats métalliques ».

La formation par voie sol-gel (par enduction puis séchage et cuisson) d'un revêtement vitreux ne nécessitant pas une cuisson élevée (entre 200°C et 400°C), il est possible d'utiliser, dans le cadre de la présente invention, tout type de fonte d'acier, et notamment une fonte à graphite lamellaire (fonte grise), une fonte à graphite sphéroïdal (fonte grise), une fonte à cœur noir (fonte blanche malléable), une fonte à cœur blanc (fonte blanche malléable), une fonte sans graphite, ou une fonte vermiculaire.

Par contre, il est nécessaire, pour permettre une bonne adhésion du revêtement vitreux sur la fonte, que celle-ci présente une rugosité de surface Ra comprise entre 5 et 15 µm avec un nombre de pics Rpc compris entre 20 et 200 pics par cm, comme illustré sur la figure 1. Ces deux conditions (Ra et nombre de pics) sont nécessaires pour obtenir une adhérence suffisante du revêtement vitreux sur la fonte d'acier. Pour une rugosité équivalente Ra, un nombre de pics trop faible conduira à des fissurations et un décollement du revêtement lors des cycles de lavage en lave-vaisselle.

Avantageusement, on pourra utiliser, dans le cadre de la présente invention, une huile de silicone présentant une viscosité cinématique à 20°C de 10 à 1000 10⁻⁶ m²s⁻¹. Lorsque la viscosité de l'huile est trop élevée (notamment supérieure à 1000 10⁻⁶ m² S⁻¹), son incorporation dans la matrice sol-gel est défavorisée, tandis que lorsque la viscosité de l'huile est trop faible (notamment inférieure à 10 10⁻⁶ m² s⁻¹), l'incorporation de l'huile est certes plus aisée, mais l'efficacité du revêtement sol-gel vis-à-vis de la tenue au lave vaisselle est moindre

On utilisera une huile réactive choisie parmi les huiles chlorées, aminées, vinylées, époxydées, méthacrylées, hydroxylées et les huiles avec terminaisons anhydrides ou hydrures.

De manière avantageuse, le polyalcoxylate métallique de la matrice du matériau sol-gel du revêtement vitreux selon l'invention peut comprendre au moins un polysiloxane.

Par ailleurs, le matériau sol-gel du revêtement vitreux selon l'invention peut comprendre en outre au moins 5% en poids par rapport au poids total du revêtement d'au moins un oxyde métallique colloïdal dispersé dans ladite matrice, cet oxyde pouvant être choisi dans le groupe comprenant la silice, l'alumine, le dioxyde de titane, l'oxyde de cérium, l'oxyde de zinc, l'oxyde de vanadium et l'oxyde de zirconium.

Avantageusement, le revêtement vitreux de l'article selon l'invention peut comprendre successivement à partir du support :
- une première couche continue pigmentée et/ou pailletée de matériau sol-gel, cette première couche étant disposée directement sur l'une des faces du support et étant elle-même recouverte par
- une deuxième couche continue et transparente de matériau sol-gel, pouvant être pailletée,
les matériaux sol-gel des première et deuxième couches pouvant être identiques ou différents et comprenant chacun une matrice formée à partir d'au moins un polyalcoxylate métallique et au moins une huile de silicone réactive ou non.

Avantageusement, le pigment pouvant être contenu dans la première couche peut être choisi parmi les pigments thermostables, les sels métalliques, les pigments semi-conducteurs thermochromes et leurs mélanges.

Avantageusement, les paillettes pouvant être contenues dans les première et deuxième couches peuvent être choisies parmi les paillettes métalliques (notamment en aluminium, en acier inoxydable, en nickel, en cuivre, en fer, ou en alliage Cu-Zn), les paillettes de mica , paillettes de mica enrobées par de l'oxyde de titane et ou un oxyde de fer, les paillettes de silice enrobées par du dioxyde de titane, les paillettes de silice enrobées par un oxyde de fer, la nacre naturelle en paillettes.

Selon un premier mode de réalisation particulièrement avantageux de cette configuration bicouche (première couche pigmentée et/ou pailletée, recouverte d'une deuxième couche transparente, pouvant être pailletée), l'article selon la présente invention peut comprendre en outre, entre les première et deuxième couches de revêtement vitreux, un décor à au moins un motif comportant au moins un pigment.

De préférence, le décor peut être fonctionnel avec un motif comportant une composition pigmentaire thermochrome avec au moins un pigment semi-conducteur thermochrome.

A titre de pigments thermochromes utilisables dans le cadre de la présente invention, on peut notamment citer l'oxyde ferrique Fe₂O₃ (par exemple celui commercialisé par la société Bayer sous la dénomination Bayferrox), le rouge de pérylène, associé à un pigment noir, et des oxydes métalliques semi-conducteurs, qui sont de préférence choisis parmi les semi-conducteurs suivants :
- V₂O₅, qui présente à température ambiante une couleur jaune orangée,
- Bi₂O₃, qui présente à température ambiante une couleur blanc cassé, très légèrement jaune,
- BiVO₄, qui est jaune à température ambiante,
- WO₃, CeO₂, In₂O₃ très semblables à Bi₂O₃, et
- Fe₂O₃, qui peut-être de orangé à brun à température ambiante, et
- le SC pyrochlore Y₁,₈₄Ca₀,₁₆Ti₁,₈₄V₀,₁₆O₁,₈₄ qui est jaune-orangé à température ambiante.

Selon un deuxième mode de réalisation particulièrement avantageux de cette configuration bicouche (première couche pigmentée et/ou pailletée, recouverte d'une deuxième couche transparente, pouvant être pailletée), la deuxième couche du revêtement vitreux et/ou une couche intermédiaire disposée entre les première et deuxième couches peut comprendre des particules magnétisables, avec au moins une zone dans laquelle lesdites particules sont essentiellement perpendiculaires au support.

Les particules magnétisables peuvent se présenter sous différentes natures.

Dans le cadre de la présente invention, les particules magnétisables peuvent être avantageusement des particules comprenant au moins un métal ferromagnétique.

Elles peuvent être de nature homogène c'est-à-dire constituées du même matériau ou de nature composite, c'est-à-dire que les particules magnétisables ont une structure cœur-enveloppe, dans laquelle le métal ferromagnétique est dans le cœur et/ou dans l'enveloppe desdites particules.

A titre d'exemples de particules magnétisables composites, on peut notamment citer des paillettes de mica enrobées d'oxyde de fer Fe₂O₃ ou des fibres d'acier inoxydable enrobées d'un matériau sol-gel, comme protection vis-à-vis de la corrosion lors des étapes de mise en œuvre du revêtement, ou encore des paillettes en matériau plastique enrobées d'oxyde de fer Fe₂O₃, ou des paillettes dont le cœur est en métal ferromagnétique et l'enveloppe est en un matériau plastique ou en un matériau sol-gel.

Le revêtement vitreux selon l'invention peut en outre avantageusement comprendre des particules non magnétisables pour améliorer le renforcement du revêtement, ces particules non magnétisables étant incluses dans la ou les couches du revêtement contenant els particules magnétisables. Ces particules non magnétisables, peuvent être de forme quelconque (sphériques, fibres ou paillettes ou « irrégulières»), de taille micrométrique, voire même nanométrique.

A titre de particules non magnétisables utilisables dans le cadre de la présente invention, on peut notamment citer les paillettes de mica, et les paillettes de mica ou de silice enrobées de dioxyde de titane.

L'article selon l'invention peut avantageusement être un article culinaire présentant une face intérieure pouvant recevoir des aliments et une face extérieure destinée à être disposée vers la source de chaleur, ledit revêtement vitreux étant appliqué sur l'une au moins desdites faces intérieure et extérieure, ou bien un article chauffant tel qu'un accessoire de barbecue, un accessoire de cheminée, une cuve de chauffe-eau, un poêle à combustibles, un conduit d'évacuation de cheminée, une baignoire ou encore du mobilier d'extérieur (par exemple du mobilier de jardin).

La présente invention a encore pour objet un procédé de fabrication d'un revêtement vitreux directement sur un support en fonte d'acier, le procédé comprenant les étapes suivantes :
a) fourniture et/ou réalisation du support présentant deux faces opposées ;
b) traitement de surface, notamment mécanique tel qu'un grenaillage ou un sablage ou un décapage laser de la ou des faces du support destinées à être revêtues, pour obtenir une rugosité de surface Ra comprise entre 5 et 15 µm avec un nombre de pics compris entre 50 et 200 par centimètre ;
c) préparation d'une composition sol-gel comprenant au moins un précurseur sol-gel de type alcoxyde métallique et au moins une huile de silicone réactive choisie parmi les huiles chlorées, aminées, vinylées, époxydées, méthacrylées, hydroxylées, et les huiles avec terminaisons anhydrides ou hydrures;
d) hydrolyse dudit précurseur sol-gel par introduction d'eau et d'un catalyseur acide ou basique, suivie d'une réaction de condensation partielle pour obtenir une composition sol-gel SG ;
e) application, directement sur l'une au moins des faces du support, d'au moins une couche de composition sol-gel SG ; et
f) cuisson à une température comprise entre 200°C et 400°C.

Le procédé selon l'invention est simplifié (en particulier le temps de procédé est réduit) et énergétiquement économique par rapport à un procédé d'émaillage. En effet, que le revêtement vitreux soit réalisé par application d'une seule ou de deux couches de composition sol-gel, le procédé selon l'invention ne comporte qu'une seule étape de cuisson, qui est réalisée à des températures bien inférieures (de l'ordre de 200 à 400°C) à celles classiquement mises en œuvre dans des procédés d'émaillage (typiquement de l'ordre de 800°C).

En outre, la durée du procédé selon l'invention est bien inférieure également à celle d'un procédé d'émaillage.

Enfin, le traitement de surface de la fonte est avantageusement un traitement mécanique (typiquement de type sablage ou grenaillage) moins agressif (c'est-à-dire conduire à un état de surface moins rugueux) que celui nécessité par un procédé d'émaillage), ce qui là aussi permet d'améliorer les cadences de revêtement.

Le traitement de surface mécanique peut être réalisé dans le cadre de la présente invention par tout médium adapté présentant une morphologie angulaire, comme du sable (sablage), un corindon ou une grenaille métallique (grenaillage avec de l'acier, notamment inoxydable). La taille du médium de sablage ou de grenaillage détermine le profil de la rugosité obtenue.

Des média de sablage ou de grenaillage présentant une taille comprise entre 35 et 140 mesh (105 à 500 µm) sont préférés. Si la granulométrie est trop forte, on obtient une valeur de Ra trop élevée et un nombre de pics trop faible. L'adhérence est bonne, mais l'aspect du revêtement devient trop rugueux. Si la granulométrie est trop faible, la valeur de Ra est trop faible et le nombre de pics trop grand. L'adhérence chute alors.

Grâce à la cuisson basse température de ces revêtements par rapport aux émaux et de la moindre complexité du procédé par rapport à un procédé d'émaillage, bon nombre de défauts d'aspect sont évités, et le taux de rebut est beaucoup plus faible.

L'huile de silicone et le support sont tels que définis précédemment.

On utilise de préférence, à titre de précurseur sol-gel, un alcoxyde métallique choisi dans le groupe constitué par :
- les précurseurs répondant à la formule générale M₁ (OR₁) _{n,}
- les précurseurs répondant à la formule générale M₂ (OR₂) (ₙ₋₁)R₂', et
- les précurseurs répondant à la formule générale M₃ (OR₃) (ₙ₋₂)R₃'₂, avec :
   R₁, R₂, R₃ ou R₃' désignant un groupement alkyle en C₁-C₄,
   R₂ ' désignant un groupement alkyle en C₁-C₄, ou phényle,
   n étant un nombre entier correspondant à la valence maximale des métaux M₁, M₂ ou M₃,
   M₁ M₂ ou M₃ désignant un métal choisi parmi Si, B, Zr, Ti, Al, V.

L'alcoxyde métallique peut donc être avantageusement choisi, par exemple, parmi les alcoxysilanes, les aluminates, les titanates, les zirconates, les vanadates, les borates et leurs mélanges.

On utilise de préférence un alcoxysilane à titre de précurseur sol-gel.

De manière avantageuse, le procédé selon l'invention peut en outre avantageusement comprendre entre les étapes e) et f) une étape d'application e') d'au moins une couche de composition sol-gel sur la face opposée à celle préalablement revêtue d'une couche de composition sol-gel.

De manière avantageuse, le procédé selon l'invention peut en outre avantageusement comprendre un séchage à une température comprise entre 40°C et 90°C, qui est réalisé entre l'application de la ou des couches de composition sol-gel et la cuisson f). Le séchage est particulièrement recommandé lorsque le revêtement sol-gel comporte un décor.

De préférence, le procédé selon l'invention peut comprendre les étapes suivantes dans le cas d'une application bicouche de compositions sol-gel :
e1) on applique, directement sur l'une au moins au moins des faces du support, une première couche continue pigmentée et/ou pailletée de composition sol-gel SG, sur laquelle
e2) on applique une deuxième couche continue d'une composition sol-gel exempte de pigments et pouvant contenir des paillettes.

Les pigments et les paillettes utilisables dans le cadre du procédé de l'invention sont tels que définis précédemment.

De manière avantageuse, le procédé selon l'invention peut en outre comprendre entre les étapes e1) et e2) d'application des première et deuxième couche de compositions sol-gel :
- une étape de séchage de la première couche, puis
- une étape de réalisation d'un décor comprenant l'application d'au moins une couche de décor comprenant au moins pigment ;
l'application de la deuxième couche étant immédiatement suivie d'un séchage avant la cuisson f).

Si le pigment est un semi-conducteur (SC) thermochrome, le décor sera dit fonctionnel car il pourra être utilisé à titre d'indicateur de température. Le pigment SC thermochrome est tel que défini précédemment.

L'invention est illustrée plus en détail dans les exemples suivants. Dans ces exemples, sauf indication contraire, tous les pourcentages et parties sont exprimés en pourcentages massiques.

### EXEMPLES

### Produits

### Supports :

- en fonte d'acier grise,
- en fonte d'acier blanche.

### Huile de silicone :

Huile méthyl silicone réactive commercialisée par la société Wacker sous la dénomination OEL CT101M réactive.

### Composition sol-gel :

- Précurseur sol-gel : méthyltriéthoxysilane (MTES)
- Charge colloïdale : silice colloïdale sous forme de solution aqueuse à 30% de silice, commercialisée par la société Clariant sous la dénomination commerciale Klebosol,
- Solvant : isopropanol.

### Pigments

Pigment noir minéral commercialisé par la société Ferro sous la dénomination commerciale « FA 1260 »,
- pigment noir minéral commercialisé par la société Ferro sous la dénomination commerciale « FA 1220 »,

### Tests

### Résistance au lave-vaisselle

On effectue un test de résistance au lave-vaisselle en utilisant un détergent pour lave-vaisselle commercialisé par la société SUN sous la dénomination « SUN Tout-un » (marque déposée), se présentant notamment sous forme de tablettes, et en observant quel est l'état du revêtement céramique déposé sur le support en fonte d'acier après un nombre donné de cycles de lavage.

Adhérence/résistance aux chocs : On utilisera le test de résistance au choc des pièces émaillées (essai au pistolet), selon la norme NF ISO 4532.

### EXEMPLE 1 (selon l'invention) : préparation d'une composition sol-gel SG selon l'invention comprenant une huile méthyl-silicone

On a réalisé une première composition sol-gel SG1 selon l'invention dont la composition est donnée dans le tableau 1 ci-après :

**Tableau 1 :**

| ***Composition SG1*** | ***Quantité (g)*** |
|---|---|
| solution aqueuse à 30% de silice colloïdale : Klebosol | 26 |
| Eau | 9 |
| Isopropanol | 5 |
| Pigment noir FA 1220 | 22 |
| Huile silicone Wacker OEL CT101M | 0,6 |
| MethylTriéthoxysilane (MTES) | 37 |
| Acide formique | 0,4 |
| **TOTAL** | **100** |

### EXEMPLE 2 (comparatif) : préparation d'une composition sol-gel SG témoin exempte d'huile de silicone

On a réalisé une deuxième composition sol-gel SG2 (à titre de comparaison) dont la composition est donnée dans le tableau 2 ci-après :

**Tableau 2 :**

| ***Composition SG2*** | ***Quantité (g)*** |
|---|---|
| solution aqueuse à 30% de silice colloïdale : Klebosol | 26 |
| Eau | 9 |
| Isopropanol | 5 |
| Pigment noir FA 1220 | 22,6 |
| Méthyltriéthoxysilane (MTES) | 37 |
| Acide formique | 0,4 |
| **TOTAL** | **100** |

### EXEMPLE 3 (selon l'invention) : réalisation d'un revêtement vitreux à base d'huile de silicone sur un support en fonte d'acier grise grenaillé

On applique par enduction au pistolet pneumatique la composition sol-gel SG1 sur un support en fonte d'acier grenaillé avec une grenaille angulaire d'acier inoxydable de taille 90 mesh, de manière à former une couche de revêtement sol-gel. Le support en fonte d'acier préalablement grenaillé présente une rugosité de surface Ra de 7 µm avec un nombre de pics par centimètre RPc de 60 pics/cm.

Puis on réalise un traitement thermique de l'article à 250°C pendant 30 minutes, afin de densifier la couche de revêtement sol-gel.
Cet article est ensuite passé au lave-vaisselle.

A l'issue de 100 cycles de lave-vaisselle, on n'observe aucune dégradation du revêtement.

De plus, le test de résistance au choc est bon, c'est-à-dire qu'on n'observe pas de cassure du revêtement laissant apparaitre le métal pour une force de choc appliquée de 20 Newtons.

### EXEMPLE 4 (comparatif) : réalisation d'un revêtement vitreux exempt d'huile de silicone sur un support en fonte d'acier grise grenaillé

On applique par enduction au pistolet pneumatique la composition sol-gel SG2 sur un support en fonte d'acier grenaillé avec le même médium que dans l'exemple 3, de manière à former une couche de revêtement sol-gel. Le support en fonte d'acier préalablement grenaillé présente donc un état de rugosité de surface dont les caractéristiques sont identiques à celles de l'exemple 3.

Puis, on réalise un traitement thermique de l'article à 250°C pendant 30 minutes, afin de densifier la couche de revêtement sol-gel.

Cet article est ensuite passé au lave-vaisselle.

On observe que, malgré une bonne adhérence du revêtement sur la fonte (le test au choc mécanique à 20 Newtons est bon, on n'observe pas d'éclats au métal comme dans l'exemple 3) et l'absence de fissurations du film de revêtement vitreux des points de corrosion se forment dès 30 cycles de lave-vaisselle. L'hydrophobie du revêtement n'est donc pas suffisante pour repousser l'eau chargée en composés alcalins (détergents) du lave-vaisselle, qui parvient à s'infiltrer jusqu'au support en fonte, créant ces points de corrosion.

### EXEMPLE 5 (comparatif) : réalisation d'un revêtement vitreux à base d'huile de silicone sur un support en fonte d'acier grise non grenaillé

On applique par enduction au pistolet pneumatique la composition sol-gel SG1 sur un support en fonte d'acier grise non grenaillé, de manière à former une couche de revêtement sol-gel. Le support en fonte d'acier est sensiblement lisse, le Ra mesuré étant de 1 µm.

Puis, on réalise un traitement thermique de l'article à 250°C pendant 30 minutes, afin de densifier la couche de revêtement sol-gel.

Cet article est ensuite testé au lave-vaisselle.

On observe, malgré une hydrophobie élevée du revêtement vitreux, une détérioration du revêtement à partir de 20 cycles de lave-vaisselle et un décollement important de ce revêtement : de fait un tel revêtement ne permet plus de protéger la fonte d'acier.

De plus, le test de résistance au choc à 20 Newtons n'est pas acceptable, des éclats au métal apparaissent après choc.

La comparaison de l'exemple 3 aux exemples comparatifs 4 et 5 montre que les deux paramètres revendiqués (présence d'huile silicone dans le revêtement céramique, et grenaillage adapté de la fonte) sont nécessaires pour obtenir une bonne résistance du revêtement vitreux au lave-vaisselle.

### EXEMPLE 6 (selon l'invention) : réalisation d'un revêtement vitreux à base d'huile de silicone sur un support en fonte d'acier blanche grenaillée

On reprend exactement le mode de réalisation de l'exemple 3, mais sur un support en fonte blanche (au lieu de la fonte grise). Le support en fonte d'acier préalablement grenaillé avec une grenaille en acier inoxydable de taille 60 mesh présente une rugosité de surface Ra de 6 µm avec un nombre de pics par centimètre RPc de 75 pics/cm.

Les résultats au test de résistance au lave vaisselle (100 cycles) et à la résistance au choc sont bons.

## Revendications

1. Article comprenant un support en fonte d'acier présentant deux faces opposées, comportant un revêtement vitreux se présentant sous la forme d'au moins une couche continue d'un matériau sol-gel comprenant une matrice d'au moins un polyalcoxylate métallique et au moins une huile de silicone ladite couche de matériau sol-gel étant disposée directement sur l'une au moins des faces dudit support, et
en ce que ladite face munie d'un revêtement vitreux présente une rugosité de surface Ra comprise entre 5 et 15 µm avec un nombre de pics par centimètre RPc compris entre 50 et 200, et en ce que l'huile de silicone est une huile réactive choisie parmi les huiles chlorées, aminées, vinylées, époxydées, méthacrylées, hydroxylées, et les huiles avec terminaisons anhydrides ou hydrures.

2. Article selon la revendication 1, dans lequel le nombre de pics par centimètre de la face munie d'un revêtement vitreux est compris entre 90 et 120.

3. Article selon l'une des revendications 1 ou 2, dans lequel le support en une fonte à graphite lamellaire, ou une fonte à graphite sphéroïdal, ou une fonte à cœur noir, ou une fonte à cœur blanc, ou une fonte sans graphite, ou encore une fonte vermiculaire.

4. Article selon l'une quelconque des revendications 1 à 3, dans lequel l'huile de silicone présente une viscosité cinématique à 20°C de 10 à 1000 10⁻⁶ m²s⁻¹.

5. Article selon l'une quelconque des revendications 1 à 4, dans lequel le polyalcoxylate métallique comprend au moins un polysiloxane.

6. Article selon l'une quelconque des revendications 1 à 5, dans lequel le matériau sol-gel comprend en outre au moins 5% en poids par rapport au poids total du revêtement d'au moins un oxyde métallique colloïdal dispersé dans ladite matrice, ledit oxyde étant choisi dans le groupe comprenant la silice, l'alumine, le dioxyde de titane, l'oxyde de cérium, l'oxyde de zinc, l'oxyde de vanadium et l'oxyde de zirconium.

7. Article selon l'une quelconque des revendications 1 à 6, dans lequel le revêtement vitreux comprend successivement à partir de l'une des faces du support :
- une première couche continue pigmentée et/ou pailletée de matériau sol-gel, ladite première couche étant disposée directement sur l'une des faces dudit support et étant elle-même recouverte par
- une deuxième couche continue et transparente de matériau sol-gel, pouvant être pailletée,
et dans lequel les matériaux sol-gel des première et deuxième couches étant identiques ou différents et comprenant chacun une matrice formée à partir d'au moins un polyalcoxylate métallique et au moins une huile de silicone réactive ou non.

8. Article selon la revendication 7, dans lequel le pigment de la première couche est choisi parmi les pigments thermostables, les sels métalliques, les pigments semi-conducteurs thermochromes et leurs mélanges.

9. Article selon l'une quelconque des revendications 7 ou 8, dans lequel les paillettes des première et deuxième couches sont choisies parmi les paillettes métalliques, les paillettes de mica , paillettes de mica enrobées par de l'oxyde de titane et ou un oxyde de fer, les paillettes de silice enrobées par du dioxyde de titane, les paillettes de silice enrobées par un oxyde de fer, la nacre naturelle en paillettes.

10. Article selon l'une quelconque des revendications 7 à 9 comprenant en outre, entre les première et deuxième couche de revêtement vitreux, un décor à au moins un motif comportant au moins un pigment.

11. Article selon la revendication 10, dans lequel le décor est fonctionnel et ledit motif comporte une composition pigmentaire thermochrome avec au moins un pigment semi-conducteur thermochrome et, de manière optionnelle, un pigment thermostable.

12. Article selon l'une quelconque des revendications 7 à 9 dans lequel la deuxième couche du revêtement vitreux et/ou une couche intermédiaire disposée entre les première et deuxième couches comprennent des particules magnétisables, avec au moins une zone dans laquelle lesdites particules sont essentiellement perpendiculaires au support.

13. Article selon la revendication 12, dans lequel lesdites particules magnétisables comprennent au moins un métal ferromagnétique.

14. Article selon l'une quelconque des revendications 1 à 13, qui est un article culinaire présentant une face intérieure pouvant recevoir des aliments et une face extérieure destinée à être disposée vers la source de chaleur, ledit revêtement vitreux étant appliqué sur l'une au moins desdites faces intérieure et extérieure.

15. Article selon l'une quelconque des revendications 1 à 13, qui est un article chauffant choisi parmi les accessoires de barbecue, les accessoires de cheminée, les cuves de chauffe-eau, les poêles à combustibles, les conduits d'évacuation de cheminée, les baignoires et le mobilier d'extérieur tel que le mobilier de jardin.

16. Procédé de fabrication d'un revêtement vitreux directement sur un support en fonte d'acier, ledit procédé comprenant les étapes suivantes :
a) fourniture et/ou réalisation du support présentant deux faces opposées ;
b) traitement de surface de la ou des faces du support destinées à être revêtues, pour obtenir une rugosité de surface Ra comprise entre 5 et 15 µm avec un nombre de pics compris entre 50 et 200 par centimètre ;
c) préparation d'une composition sol-gel comprenant au moins un précurseur sol-gel de type alcoxyde métallique et au moins une huile de silicone réactive choisie parmi les huiles chlorées, aminées, vinylées, époxydées, méthacrylées, hydroxylées, et les huiles avec terminaisons anhydrides ou hydrures;
d) hydrolyse dudit précurseur sol-gel par introduction d'eau et d'un catalyseur acide ou basique, suivie d'une réaction de condensation partielle pour obtenir une composition sol-gel SG ;
e) application, directement sur l'une au moins des faces du support, d'au moins une couche de composition sol-gel SG ; et
f) cuisson à une température comprise entre 200°C et 400°C.

17. Procédé selon la revendication 16, comprenant en outre, entre les étapes e) et f) une étape d'application e') d'au moins une couche de composition sol-gel sur la face opposée à celle préalablement revêtue d'une couche de composition sol-gel.

18. Procédé selon l'une quelconque des revendications 16 ou 17, **caractérisé en ce qu'**il comprend en outre un séchage à une température comprise entre 40°C et 90°C, qui est réalisé entre l'application de la ou des couches de composition sol-gel et la cuisson f).

19. Procédé selon l'une quelconque des revendications 16 à 18, dans lequel :
e1) on applique, directement sur l'une au moins au moins des faces du support, une première couche continue pigmentée et/ou pailletée de composition sol-gel SG, sur laquelle
e2) on applique une deuxième couche continue d'une composition sol-gel exempte de pigments et pouvant contenir des paillettes.

20. Procédé selon la revendication 19, comprenant en outre, entre les étapes e1) et e2) d'application des première et deuxième couche de compositions sol-gel :
- une étape de séchage de la première couche, puis
- une étape de réalisation d'un décor fonctionnel comprenant l'application d'au moins une couche de décor comprenant au moins pigment semi-conducteur thermochrome,
et dans lequel l'application de la deuxième couche est immédiatement suivie d'un séchage avant la cuisson f).

21. Procédé selon l'une quelconque des revendications 16 à 20, le traitement mécanique de surface du support est un grenaillage.

## Patentansprüche

1. Artikel, umfassend einen Träger aus Gussstahl, der zwei gegenüberliegende Flächen aufweist, aufweisend eine glasartige Beschichtung, die in Form von mindestens einer kontinuierlichen Schicht eines Sol-Gel-Werkstoffs vorliegt, umfassend eine Matrix aus mindestens einem metallischen Polyalcoxylat und mindestens einem Silikonöl, wobei die Schicht aus Sol-Gel-Werkstoff direkt auf mindestens einer der Flächen des Trägers angeordnet ist, und
dass die mit einer glasartigen Beschichtung versehene Fläche eine Oberflächenrauigkeit Ra aufweist, die zwischen 3 und 15 µm liegt, mit einer Anzahl von Spitzen je Zentimeter RPc zwischen 50 und 200,
und dass das Silikonöl ein reaktives Öl ist, ausgewählt aus den Chlor-, Amin-, Vinyl-, Epoxyd-, Methacryl-, Hydroxylölen und den Ölen mit Anhydrid- oder Hydridterminierungen.

2. Artikel nach Anspruch 1, wobei die Anzahl von Spitzen je Zentimeter der mit einer glasartigen Beschichtung versehenen Fläche zwischen 90 und 120 liegt.

3. Artikel nach einem der Ansprüche 1 oder 2, wobei der Träger ein Lamellengraphit-Guss oder ein Kugelgraphit-Guss oder ein schwarzer Temperguss oder ein weißer Temperguss oder ein Guss ohne Graphit oder auch ein Vermicularguss ist.

4. Artikel nach einem der Ansprüche 1 bis 3, wobei das Silikonöl eine kinematische Viskosität bei 20°C von 10 bis 1000 10⁻⁶ m²s⁻¹ aufweist.

5. Artikel nach einem der Ansprüche 1 bis 4, wobei das metallische Polyalcoxylat mindestens ein Polysiloxan umfasst.

6. Artikel nach einem der Ansprüche 1 bis 5, wobei der Sol-Gel-Werkstoff ferner mindestens 5 Gew.-% in Bezug auf das Gesamtgewicht der Beschichtung mindestens eines in der Matrix dispergierten kolloidalen Metalloxids umfasst, wobei das Oxid aus der Gruppe ausgewählt ist, die Siliciumdioxid, Aluminiumoxid, Titandioxid, Ceroxid, Zinkoxid, Vanadiumoxid und Zirconiumoxid umfasst.

7. Artikel nach einem der Ansprüche 1 bis 6, wobei die glasartige Beschichtung aufeinanderfolgend ab einer der Flächen des Trägers umfasst:
- eine erste kontinuierliche pigmentierte und/oder paillettierte Schicht aus Sol-Gel-Werkstoff, wobei die erste Schicht direkt auf einer der Flächen des Trägers angeordnet ist und selbst beschichtet ist mit
- einer zweiten kontinuierlichen und transparenten Schicht aus Sol-Gel-Werkstoffs, die paillettiert sein kann,
und wobei die Sol-Gel-Werkstoffe der ersten und zweiten Schicht identisch oder unterschiedlich sind und jeweils eine Matrix umfasst, die aus mindestens einem metallischen Polyalcoxylat und mindestens einem reaktiven oder nicht reaktiven Silikonöl gebildet ist.

8. Artikel nach Anspruch 7, wobei das Pigment der ersten Schicht aus den thermisch stabilen Pigmenten, den Metallsalzen, den thermochromen halbleitenden Pigmenten und ihren Gemischen ausgewählt ist.

9. Artikel nach einem der Ansprüche 7 oder 8, wobei die Pailletten der ersten und zweiten Schicht aus den Metallpailletten, den Glimmerpailletten, den mit Titanoxid und oder einem Eisenoxid ummantelten Glimmerpailletten, den mit Titanoxid ummantelten Siliciumoxidpailletten, den mit einem Eisenoxid ummantelten Siliciumoxidpailletten, dem natürlichen Perlmutt als Pailletten ausgewählt sind.

10. Artikel nach einem der Ansprüche 7 bis 9, umfassend ferner zwischen der ersten und zweiten glasartigen Beschichtungsschicht ein Dekor mit mindestens einem Motiv, das mindestens ein Pigment aufweist.

11. Artikel nach Anspruch 10, wobei das Dekor funktional ist und das Motiv eine thermochrome Pigmentzusammensetzung mit mindestens einem thermochromen halbleitenden Pigment und optional einem thermisch stabilen Pigment aufweist.

12. Artikel nach einem der Ansprüche 7 bis 9, wobei die zweite Schicht der glasartigen Beschichtung und/oder eine Übergangsschicht, die zwischen der ersten und zweiten Schicht angeordnet ist, magnetisierbare Partikel umfassen mit mindestens einer Zone, in welcher die Partikel im Wesentlichen senkrecht zum Träger sind.

13. Artikel nach Anspruch 12, wobei die magnetisierbaren Partikel mindestens ein ferromagnetisches Metall umfassen.

14. Artikel nach einem der Ansprüche 1 bis 13, der ein Kulinarikartikel ist, aufweisend eine innere Fläche, die Lebensmittel aufnehmen kann, und eine äußere Fläche, die bestimmt ist, in Richtung der Wärmequelle angeordnet zu sein, wobei die glasartige Beschichtung auf die eine von mindestens einer der inneren und äußeren Fläche aufgetragen ist.

15. Artikel nach einem der Ansprüche 1 bis 13, der ein erwärmender Artikel ist, ausgewählt aus dem Grillzubehör, dem Abzugszubehör, den Wassererhitzergefäßen, den Brennstofföfen, den Abzugableitungsleitungen, den Badewannen und dem Outdoormobiliar wie dem Gartenmobiliar.

16. Verfahren zur Herstellung einer glasartigen Beschichtung direkt auf einem Träger aus Gussstahl, wobei das Verfahren die folgenden Schritte umfasst:
a) Bereitstellen und/oder Herstellen des Trägers, der zwei gegenüberliegende Flächen aufweist;
b) Oberflächenbehandeln der Fläche(n) des Trägers, die bestimmt ist/sind, beschichtet zu sein, um eine Oberflächenrauigkeit Ra zwischen 5 und 15 µm mit einer Anzahl von Spitzen zwischen 50 und 200 je Zentimeter zu erhalten;
c) Herstellen einer Sol-Gel-Zusammensetzung, umfassend mindestens einen Sol-Gel-Vorläufer vom Typ Metallalcoxid und mindestens ein reaktives Silikonöl, ausgewählt aus den Chlor-, Amin-, Vinyl-, Epoxyd-, Methacryl-, Hydroxylölen und den Ölen mit Anhydrid- oder Hydridterminierungen;
d) Hydrolysieren des Sol-Gel-Vorläufers durch Einleiten von Wasser und eines sauren oder basischen Katalysators, gefolgt von einer Teilkondensationsreaktion, um eine Sol-Gel-Zusammensetzung SG zu erhalten;
e) Auftragen, direkt auf mindestens eine der Flächen des Trägers, mindestens einer Sol-Gel-Zusammensetzungsschicht SG; und
f) Brennen bei einer Temperatur zwischen 200°C und 400°C.

17. Verfahren nach Anspruch 16, umfassend ferner, zwischen den Schichten e) und f), einen Schritt des Auftragens e') mindestens einer Sol-Gel-Zusammensetzungsschicht auf der Fläche, die der gegenüberliegt, die zuvor mit einer Sol-Gel-Zusammensetzungsschicht beschichtet wurde.

18. Verfahren nach einem der Ansprüche 16 oder 17, **dadurch gekennzeichnet, dass** es ferner ein Trocknen bei einer Temperatur zwischen 40°C und 90°C umfasst, das zwischen dem Auftragen der Sol-Gel-Zusammensetzungsschicht(en) und dem Brennen f) durchgeführt wird.

19. Verfahren nach einem der Ansprüche 16 bis 18, wobei:
e1) direkt auf mindestens eine mindestens der Flächen des Trägers eine erste kontinuierliche pigmentierte und/oder paillettierte Schicht einer Sol-Gel-Zusammensetzung SG aufgetragen wird, auf die
e2) eine zweite kontinuierliche Schicht einer Sol-Gel-Zusammensetzung ohne Pigmente und die Pailletten enthalten kann, auftragen wird.

20. Verfahren nach Anspruch 19, umfassend ferner zwischen den Schritten e1) und e2) des Auftragens der ersten und zweiten Sol-Gel-Zusammensetzungsschicht:
- einen Trocknungsschritt der ersten Schicht, dann
- einen Schritt des Herstellens eines funktionalen Dekors, umfassend das Auftragen mindestens einer Dekorschicht, umfassend mindestens ein thermochromes halbleitendes Pigment,
und wobei dem Auftragen der zweiten Schicht unmittelbar ein Trocknen vor dem Brennen f) folgt.

21. Verfahren nach einem der Ansprüche 16 bis 20, wobei die mechanische Oberflächenbehandlung des Trägers ein Kugelstrahlen ist.

## Claims

1. An article comprising a cast iron support having two opposite sides, including a vitreous coating in the form of at least one continuous layer of a sol-gel material comprising a matrix from at least one metal polyalkoxylate and at least one silicone oil, said layer of sol-gel material being disposed directly on at least one side of said support, and
in that said side provided with a vitreous coating has a surface roughness Ra comprised between 5 and 15 µm with a peak count per centimeter RPc comprised between 50 and 200, and in that the silicone oil is a reactive oil selected from chlorinated, aminated, vinylated, epoxidized, methacrylated, hydroxylated, and anhydride-or hydride-terminated oils.

2. The article as claimed in claim 1, wherein the peak count per centimeter of the side provided with a vitreous coating is between 90 and 120.

3. The article as claimed in one of claims 1 or 2, wherein the support is made of a lamellar graphite cast iron, or a spheroidal graphite cast iron, or a blackheart cast iron, or a whiteheart cast iron, or a graphite-free cast iron, or a vermicular cast iron.

4. The article as claimed in any one of claims 1 to 3, wherein the silicone oil has a kinematic viscosity at 20°C of 10 to 1000 10⁻⁶ m²s⁻¹.

5. The article as claimed in any one of claims 1 to 4, wherein the metal polyalkoxylate comprises at least one polysiloxane.

6. The article as claimed in any one of claims 1 to 5, wherein the sol-gel material further comprises at least 5% by weight based on the total weight of the coating of at least one colloidal metal oxide dispersed in said matrix, said oxide being selected from the group consisting of silica, alumina, titanium dioxide, cerium oxide, zinc oxide, vanadium oxide and zirconium oxide.

7. The article as claimed in any one of claims 1 to 6, wherein the vitreous coating comprises successively from one side of the support:
- a first continuous pigmented and/or flaky layer of sol-gel material, said first layer being disposed directly on one of the sides of said support and being itself covered with
- a second continuous and transparent layer of sol-gel material, which can be flaky,
and wherein the sol-gel materials of the first and second layers are the same or different and each comprises a matrix formed from at least one metal polyalkoxylate and at least one reactive or non-reactive silicone oil.

8. The article as claimed in claim 7, wherein the pigment of the first layer is selected from thermostable pigments, metal salts, thermochromic semiconductor pigments and mixtures thereof.

9. The article as claimed in any one of claims 7 or 8, wherein the flakes of the first and second layers are selected from metal flakes, mica flakes, mica flakes coated with titanium oxide and or an iron oxide, silica flakes coated with titanium dioxide, silica flakes coated with an iron oxide, natural mother-of-pearl in flakes.

10. The article as claimed in any one of claims 7 to 9, further comprising, between the first and second layer of vitreous coating, a decoration with at least one pattern comprising at least one pigment.

11. The article as claimed in claim 10, wherein the decor is functional and said pattern comprises a thermochromic pigment composition with at least one thermochromic semiconductor pigment and, optionally, a thermostable pigment.

12. The article as claimed in any one of claims 7 to 9, wherein the second layer of the vitreous coating and/or an intermediate layer disposed between the first and second layers comprise magnetizable particles, with at least one area wherein said particles are substantially perpendicular to the support.

13. The article as claimed in claim 12, wherein said magnetizable particles comprise at least one ferromagnetic metal.

14. The article as claimed in any one of claims 1 to 13, which is a culinary article having an inner side able to receive food and an outer side intended to be arranged towards the heat source, said vitreous coating being applied to at least one of said inner and outer sides.

15. The article as claimed in any one of claims 1 to 13, which is a heating item selected from barbecue accessories, fireplace accessories, water heater tanks, fuel stoves, chimney flues, bathtubs and outdoor furniture such as garden furniture.

16. A process for manufacturing a vitreous coating directly on a cast iron support, said process comprising the following steps:
a) providing and/or making the support having two opposite sides;
b) surface treatment of the side or sides of the support intended to be coated, in order to obtain a surface roughness Ra comprised between 5 and 15 µm with a peak count comprised between 50 and 200 per centimeter;
c) preparation of a sol-gel composition comprising at least one sol-gel precursor of metal alkoxide type and at least one reactive silicone oil selected from chlorinated, aminated, vinylated, epoxidized, methacrylated, hydroxylated, and anhydride- or hydride-terminated oils;
d) hydrolysis of said sol-gel precursor by introduction of water and an acidic or basic catalyst, followed by a partial condensation reaction to obtain a sol-gel SG composition;
e) application, directly to at least one side of the support, of at least one layer of sol-gel composition SG; and
f) curing at a temperature comprised between 200°C and 400°C.

17. The process as claimed in claim 16, further comprising, between steps e) and f), a step e') of applying at least one layer of sol-gel composition on the side opposite that previously coated with a layer of sol-gel composition.

18. The process as claimed in any one of claims 16 or 17, **characterized in that** it further comprises drying at a temperature between 40°C and 90°C, which is carried out between the application of the one or more layers of sol-gel composition and curing f).

19. The process as claimed in any one of claims 16 to 18, wherein:
e1) a first continuous pigmented and/or flaky layer of sol-gel composition SG is applied directly to at least one side of the support, on which
e2) a second continuous layer of a pigment-free sol-gel composition which may contain flakes is applied.

20. The process as claimed in claim 19, further comprising, between steps e1) and e2) applying the first and second layer of sol-gel compositions:
- a step of drying the first layer, then
- a step of producing a functional decoration comprising the application of at least one layer of decoration comprising at least one thermochromic semiconducting pigment,
and wherein the application of the second layer is immediately followed by drying before curing f).

21. The process as claimed in any one of claims 16 to 20, wherein the mechanical surface treatment of the substrate is shot blasting.
